# EUROPEAN PATENT SPECIFICATION

(11) **EP 3 149 248 B1**
(45) Date of publication and mention of the grant of the patent: **01.07.2020**
(21) Application number: 14893639.6
(22) Date of filing: 27.05.2014
(51) Int. Cl.: E02F 3/96, E04G 23/08, B02C 1/02, B23D 17/06, B02C 1/10, B23D 35/00

(54) **APPARATUS FOR PULLING A CONCRETE STRUCTURE DOWN**
VORRICHTUNG ZUM ABREISSEN EINER BETONSTRUKTUR
APPAREIL POUR TIRER UNE STRUCTURE EN BÉTON VERS LE BAS

(43) Date of publication of application: 05.04.2017
(73) Proprietor: Savonlinnan Pr-urakointi OY, 57100 Savonlinna (FI)
(72) Inventor: BRUNOU, Jarkko, FI-57100 Savonlinna (FI); RÄSÄNEN, Pentti, FI-57710 Savonlinna (FI)
(74) Representative: Berggren Oy, Helsinki & Oulu
(86) International application number: PCT/FI2014/050415
(87) International publication number: WO 2015/181435

(56) References cited:
- DE-A1- 2 722 258
- DE-A1- 3 346 235
- JP-A- H04 179 774
- JP-A- 2007 009 679
- JP-U- S57 153 151
- US-A- 4 616 417
- US-A- 4 951 886
- US-A- 5 438 772
- US-A- 5 704 560

## Description

### Technical field

The application relates generally to equipment for demolishing concrete.

### Background

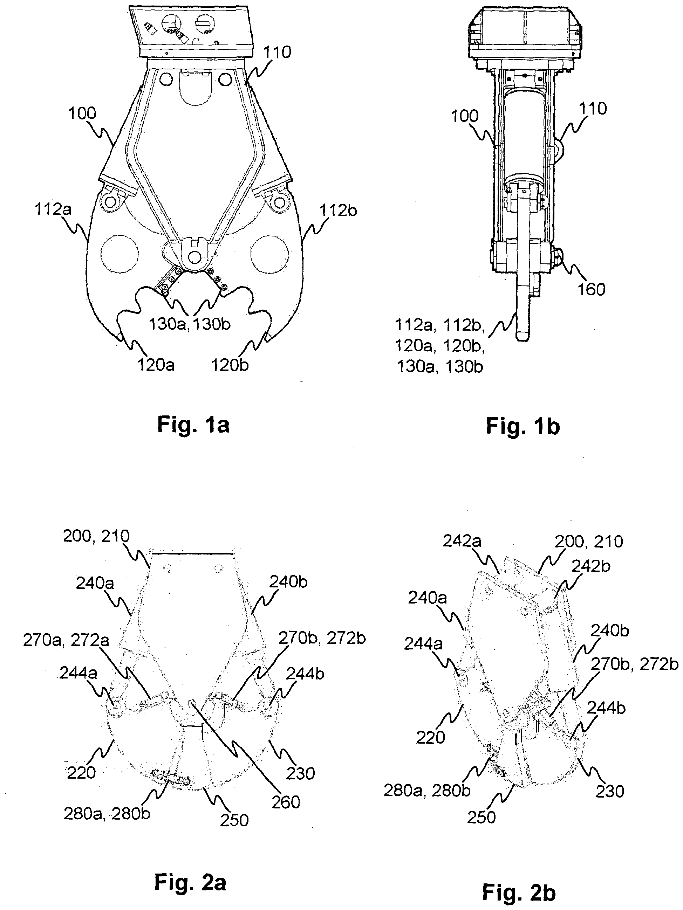

In concrete structures, the concrete has generally embedded therein e.g. steel reinforcing bars, whereby demolition of the structures with a utility machine is difficult and requires the use of special equipment. One such special piece of equipment comprises concrete demolition shears 100 as shown in figs. 1a-1b, which are detachably mountable on a utility machine, e.g. on an excavator, and which are capable of being operated and directed by means of the utility machine.

In the concrete shears 100, a frame 110 thereof is fitted with jaws 112a, 112b, comprising successive blades 120a, 120b intended for breaking concrete and blades 130a, 130b intended for cutting metal, which blades are moving concentrically relative to a center axle 160. A result of this is that pieces of broken concrete end up in a space between the metal cutting blades 130a, 130b, thus dulling the blades.

In addition, the opening directions of the jaws 112a, 112b are down or almost directly down, which makes aligning the concrete shears 100 more difficult with an excavator. In the process of dismantling a bridge edge beam, it is because of the directly down-opening jaws 112a, 112b that the excavator is forced to work with its boom outstretched as a result of which the excavator's center of gravity shifts closer to the equilibrium point. The center of gravity having shifted to near the equilibrium point and working with the machine's maximum reach result in the work slowing down and hampering the control over movements. In addition, the working range of a stationary excavator becomes smaller.

Moreover, with the successive concrete and metal blades 120a, 120b, 130a, 130b of the concrete shears 100 it is difficult to cut large metal profiles as these are difficult to bring into an action range of the cutting blades 130a, 130b even if the cutting force were sufficient for cutting the profile. In the process of cutting work, it will be necessary to make several cutting actions provided that cutting the profile is even possible to begin with.

Generally available for the concrete shears 100 are different sets of jaws for breaking up concrete and cutting metal. The replacement of blades, however, takes from ten minutes to a couple of days, and the replacement of blades conducted several times a day affects the flow of work and undermines considerably the productivity of work.

One example of a multi-purpose crushing and cutting tool is disclosed in patent document US5438772 on which the preamble of claim 1 is based.

### Summary

One objective of the invention is to eliminate some of the aforesaid problems of currently available concrete shears intended for the demolition of steel reinforced concrete.

One objective of the invention is attained with the apparatus and the utility machine according to the independent claims.

An apparatus according to one embodiment for demolishing a concrete structure is attachable to a utility machine in a removable manner and provided with a crushing blade adapted to concrete crushing and with a cutting blade adapted to metal cutting. The crushing blade and the cutting blade are blades separate from each other, and the apparatus is further provided with a combination blade which is adapted for use in concrete crushing jointly with the crushing blade and/or which is adapted for use in metal cutting jointly with the cutting blade, and with actuation elements adapted to operate the crushing, cutting and combination blades.

A utility machine according to one embodiment comprises an apparatus for demolishing a concrete structure, said apparatus being attachable to the utility machine in a removable manner and said apparatus being provided with a crushing blade adapted to concrete crushing and with a cutting blade adapted to metal cutting. The crushing blade and the cutting blade are blades separate from each other, and the apparatus is further provided with a combination blade which is adapted for use in concrete crushing jointly with the crushing blade and/or which is adapted for use in metal cutting jointly with the cutting blade, and with actuation elements adapted to operate the crushing, cutting and combination blades.

The term "utility machine" is used in reference e.g. to an excavator (digging machine), which can be a fully rotating excavator, backhoe loader, or mini-excavator mounted e.g. on a wheel or track chassis.

Other embodiments are presented in the dependent claims.

The apparatus according to the embodiments enables high performance metal cutting and concrete crushing without the replacement of jaws or broken pieces of concrete ending up on the blades intended for metal cutting.

In addition, the apparatus according to the embodiments is highly suitable e.g. for the demolition of bridge edge beams and for the demolition of other such structures present beneath the excavator. The apparatus enables the working range of an excavator to be increased without moving the excavator and, at the same time, it enables the cutting of steel rebars, barriers constructed from sizable steel profiles, and the breaking of concrete, Furthermore, the balance and handling characteristics of an excavator will be improved, it being possible to operate the excavator with a shorter boom, the apparatus being detachably mounted thereon.

The foregoing aspects lead moreover to an improved flow of work.

The invention can be generally utilized in reinforced concrete demolition work,

### Brief description of the figures

It is in the detailed description of the figures that exemplary embodiments of the invention will be explained more precisely with reference to the accompanying figures, in which
- figs. 1a-1b: show concrete shears of the prior art in side and frontal views, and
- figs. 2a-2f: show an apparatus for demolishing concrete structures from various viewing angles, and the use of its combination blade.

### Detailed description of the figures

Figs. 1a-1b have been discussed above in the background section.

In figs. 2a-2b there is shown, in a direct side view and in an oblique side view, an apparatus 200 for demolishing a concrete structure, which is attachable to a utility machine, e.g. an excavator, in a removable manner by means of fastening elements (not shown) included in its frame 210. The attached apparatus 200, which is connected e.g. to the electrical or hydraulic system of a utility machine so as to enable its control from the utility machine, is adapted to swivel and rotate at the end of the utility machine's boom. The apparatus 200 can be controlled to perform e.g. one of the following operations: compression action, opening action, blade shifting, blade attachment and blade detachment.

The apparatus 200 includes, spaced from each other, a separate crushing blade (crushing jaw) 220 intended for concrete breaking and/or crushing, which is provided with a tooth 280a intended for concrete breaking, and a separate cutting blade (cutting jaw) 230 intended for metal cutting. The apparatus further includes, as a third separate blade, a combination blade (combination jaw) 250, which is provided with a tooth 280b complementary to the tooth 280a. The combination blade is used for concrete breaking and/or crushing jointly with the crushing blade 220 and/or for metal cutting jointly with the cutting blade 230.

In addition, the apparatus 200 includes actuation elements 240a, 240b, which are mounted on the frame 210 by means of axles 242a, 242b and which are e.g. hydraulic or pneumatic cylinders or hydro- or electromechanical linear actuation elements (motors), which are connected by means of axles 244a, 244b at the end thereof to the crushing and cutting blades 220, 230. The elements 240a, 240b, which are supplied with e.g. electrically or hydraulically transmissible control commands by the utility machine operator from the utility machine's cabin, are adapted to operate the crushing, cutting and combination blades 220, 230, 250 around a single center axle 260 included in the frame 210.

In a utility machine according to one embodiment, which has been presented in any of the preceding embodiments, there is fitted the apparatus 200 intended for the demolition of concrete, wherein the crushing, cutting and combination blades 220, 230, 250 are adapted to move around one common center axle 260.

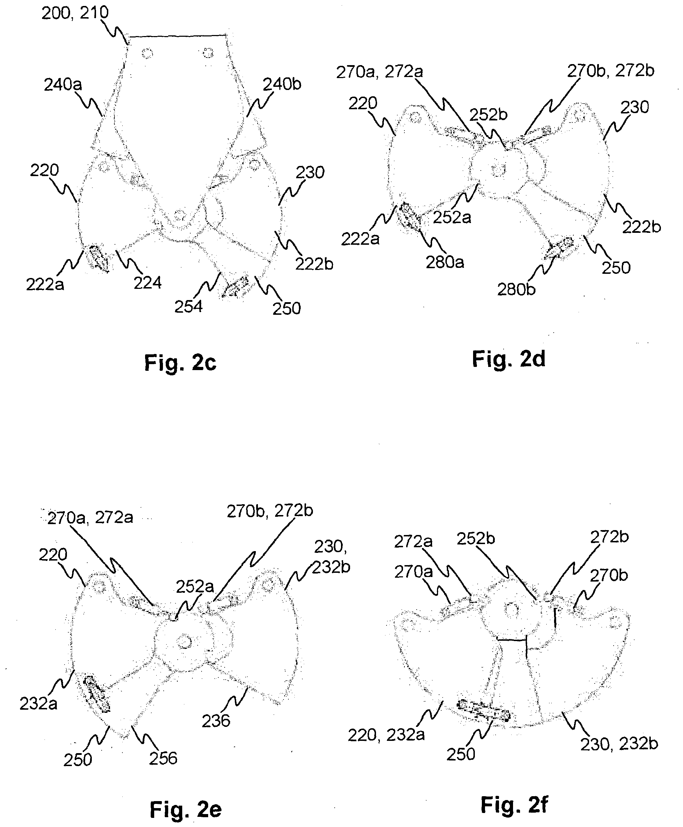

Figs. 2c-2d and 2e-2f illustrate in side views the way of utilizing the combination blade 250 of the apparatus 200 both in concrete crushing and in metal cutting.

Fig. 2c depicts how the crushing blade 220 makes up a first crushing jaw 222a, as well as how the combination blade 250, which has been attached in engagement with the cutting blade 230, and the cutting blade 230 jointly make up a second crushing jaw 222b.

When, as shown in fig. 2c, the presently open crushing jaws 222a, 222b are forced with the elements 240a, 240b towards each other e.g. for crushing a piece of concrete present between the jaws 222a, 222b, the jaws 222a, 222b rotate relative to the axle 260 towards each other and at the same time squeeze and break up the piece of concrete by means of their teeth 280a, 280b and their edges 224, 254, i.e. the actual blade members, intended for concrete crushing. Regarding e.g. a hydraulic cylinder 240a, 240b, in a minus stroke the piston of the cylinder 240a, 240b is retracted inside the same and in a plus stroke, on the other hand, the piston of the cylinder 240a, 240b is extended out of the cylinder 240a, 240b. Hence, the compression can be implemented by supplying the cylinders 240a, 240b with a control command upon which a plus stroke is performed thereby. Respectively, when it is desirable to open the jaws 222a, 222b with the actuation elements 240a, 240b, said jaws rotate relative to the axle 260 away from each other. This can be implemented by supplying the cylinders 240a, 240b with a control command upon which a minus stroke is performed thereby.

As revealed in fig. 2b, the crushing blade 220 and the cutting blade 230 have trajectories relative to the center axle 260 adapted to extend in such a way that, as the jaws 222a, 222b are pushed, i.e. compressed, the crushing and cutting blades 220, 230 are moving counter-directionally towards each other along a common trajectory, and the combination blade 250 has its trajectory adapted to extend co-directionally with the cutting blade 230, yet in an overlapping fashion relative to both the crushing blade 220 and the cutting blade 230 (so-called "cross-bite"). Thereby is increased the effectiveness of compression in comparison e.g. with jaws merely coinciding with each other as shown in figs. 1a-1b.

In a utility machine according to one embodiment, which has been presented in any of the preceding embodiments, there is fitted the apparatus 200 intended for the demolition of concrete, wherein the trajectories of the crushing and cutting blades 220, 230 are adapted to extend counter-directionally towards each other. In addition, the combination blade 250 has its trajectory adapted to extend in an overlapping fashion with respect to the trajectories of the crushing and cutting blades 220, 230.

From fig. 2d is omitted the frame 210 for a clearer view of shifting and locking means 252a, 252b, 270a, 270b, 272a, 272b, which are included in the apparatus 200 for the combination blade 250 and which are adapted to displace the combination blade 250 and to lock the same into engagement with the cutting blade 230, thus making it possible to crush concrete with the crushing and combination blades 220, 250.

The means 252a, 252b, 270a, 270b, 272a, 272b comprise locking slots 252a, 252b included in the combination blade 250, a first hydraulic or pneumatic cylinder 270a connected to the crushing blade 220 and provided with a transverse locking pin 272a, and a second hydraulic or pneumatic cylinder 270b connected to the cutting blade 230 and provided with a locking pin 272b clearly visible in fig. 2b. Alternatively, the cylinders 270a, 270b can also be implemented with hydro- or electromechanical manipulation units.

The cylinders 270a, 270b are cross-connected, whereby, when the cylinder 270a performs a minus stroke, i.e. the cylinder 270a has its piston retracting into its interior, the cylinder 270b is thereby performing a plus stroke, i.e. the cylinder 270b has its piston extending out of the cylinder, and vice versa.

In the process of locking the combination blade 250 to the cutting blade 230 for establishing the jaws 222a, 222b, the cylinder 270b is controlled to perform a plus stroke, whereby the cylinder 270b has its piston extending out and at the same time pushing the locking pin 272b present at the end of the cylinder's 270 piston into a corner of the combination blade's 250 slot 252b, thus swinging the combination blade 250 into an overlapping engagement with the cutting blade 230 and locking the same detachably to each other, thereby establishing the jaw 222b and the separately remaining crushing blade 220 establishing the jaw 222a as shown in fig. 2d. The combination blade 250 is disengaged from the cutting blade 230 respectively by controlling the cylinder 270b to perform a minus stroke, whereby its piston retracts back into the cylinder 270b and at the same time raises the locking pin 272b at the piston's end out of the slot 252b, the combination blade 250 thereby disengaging from the crushing blade 230.

Fig. 2e shows how the crushing blade 220 and the combination blade 250 attached thereto make up a first cutting jaw 232a and the cutting blade 230 makes up a second cutting jaw 232b for the cutting and/or severing of metal.

In a utility machine according to one embodiment, which has been presented in any of the preceding embodiments, there is fitted the apparatus 200 intended for the demolition of concrete, which further includes shifting and locking means 252a, 252b, 270a, 270b, 272a, 272b adapted to displace the combination blade 250 and to lock the same into engagement with the cutting blade 230, making it possible to crush concrete with the crushing and combination blades 220, 250, i.e. with the jaws 222a, 222b. In addition, such means are adapted to displace the combination blade 250 and to lock the same into engagement with the crushing blade 220, making it possible to cut metal with the cutting and combination blades 230, 250, i.e. with the jaws 232a, 232b.

When, as shown in fig. 2e, the presently open cutting jaws 232a, 232b are compressed with the elements 240a, 240b toward each other e.g. for severing a steel rebar present between the jaws 232a, 232b, the jaws 232a, 232b rotate relative to the axle 260 towards each other and cut off the steel rebar by means of edges 236, 256, i.e. the actual blade members, intended for metal cutting. Fig. 2f shows the condition in which the blades 220, 230 have been compressed towards each other with a "loose" unattached combination blade 250 therebetween, but if it is desirable to use the elements 240a, 240b for opening the compressed jaws 232a, 232b, the latter shall rotate relative to the axle 260 away from each other.

Since the combination blade 250, which has been engaged with the crushing blade 220, has its trajectory adapted to extend counter-directionally and in an overlapping fashion with the cutting blade 230, the cutting action will be increased in strength as compared to the concrete shears 100 of figs. 1a-1b.

Figs. 2e-2f disclose means 252a, 252b, 270a, 270b, 272a, 272b, which are adapted to displace the combination blade 250 and to lock the same into engagement with the crushing blade 220, making it possible to cut metal with the cutting and combination blades 230, 250, i.e. with the jaws 232a, 232b.

In fig. 2f, both cylinders 270a, 270b have pistons exceptionally inside but, when the unattached combination blade 250 is locked to other blades 220, 230, to the crushing blade 220, for establishing the jaws 232a, 232b, the cylinder 270a is controlled to perform a plus stroke. Thus, the cylinder's 270a piston extends out and at the same time pushes the locking pin 272a at the end of the cylinder's 270a piston into a corner of the combination blade's 250 slot 252a, swinging the combination blade 250 into an overlapping engagement with the crushing blade 220 and locking the same detachably to each other, thereby establishing the jaw 232a and the separately remaining cutting blade 230 establishing the jaw 232b as shown in fig. 2e. The combination blade 250 is disengaged from the crushing blade 220 respectively by controlling the cylinder 270a to perform a minus stroke, whereby its piston retracts back into the cylinder 270a and at the same time raises the locking pin 272a at the piston's end out of the slot 252a, the combination blade 250 thereby disengaging from the crushing blade 230.

In a utility machine according to one embodiment, which has been presented in any of the preceding embodiments, there is fitted the apparatus 200 intended for the demolition of concrete, wherein the shifting and locking means 252a, 252b, 270a, 270b, 272a, 272b comprise slots 252a, 252b included in the combination blade 250, and a first hydraulic or pneumatic cylinder 270a attached to the crushing blade 220 and provided with a locking pin 272a. The locking pin 272a is adapted to become detachably locked within the first slot 252a as the combination blade 250 is locked to the crushing blade 220 for providing the apparatus 200 with cutting jaws 232a, 232b. In addition, the means 252a, 252b, 270a, 270b, 272a, 272b comprise a second hydraulic or pneumatic cylinder 270b attached to the cutting blade 230 and provided with a locking pin 272b which is adapted to become detachably locked within the second slot 252b as the combination blade 250 is locked to the cutting blade 230 for providing the apparatus 200 with crushing jaws 222a, 222b.

The foregoing has only described a few exemplary embodiments of the invention. The principle of the invention can naturally be varied within the scope of protection defined by the claims, regarding for example implementation details as well as fields of use.

## Claims

1. A demolishing apparatus (200) for demolishing a concrete structure, comprising
a crushing blade (220) for concrete crushing,
a cutting blade (230) for metal cutting,
a combination blade (250) for use in concrete crushing jointly with the crushing blade and for use in metal cutting jointly with the cutting blade, and
actuation elements (240a, 240b) for operating the crushing, cutting and combination blades,
which apparatus is attachable to a utility machine in a removable manner, wherein the crushing and cutting blades (220, 230) are separate from each other,
wherein the crushing blade makes up a first crushing jaw (222a), and the attached combination and cutting blades jointly make up a second crushing jaw (222b), and
wherein the attached crushing and combination blades make up a first cutting jaw (232a), and the cutting blade makes up a second cutting jaw (232b),
**characterized in that**
the actuation elements (240a, 240b) compress the crushing jaws (222a, 222b) and the cutting jaws (232a, 232b) towards each other, wherein the crushing, cutting, and combination blades (220, 230, 250) move around a common center axle (260).

2. The apparatus according to the preceding claim, wherein the crushing and cutting blades have trajectories, which extend counter-directionally towards each other and the combination blade has a trajectory which extends in an overlapping fashion with respect to the trajectories of the crushing and cutting blades.

3. The apparatus according to any of the preceding claims, which further includes shifting and locking means (252a, 252b, 270a, 270b, 272a, 272b), which displace the combination blade and lock the same into engagement with the cutting blade, making it possible to crush concrete with the crushing and combination blades, and which displace the combination blade and lock the same into engagement with the crushing blade, making it possible to cut metal with the cutting and combination blades.

4. The apparatus according claim 3, wherein the shifting and locking means comprise slots (252a, 252b) included in the combination blade, a first hydraulic cylinder (270a), attached to the crushing blade and provided with a locking pin (272a) which becomes detachably locked with the first slot (252a) as the combination blade is locked to the crushing blade for providing the apparatus with the cutting jaws, and a second hydraulic cylinder (270b), attached to the cutting blade and provided with a locking pin (272b) which becomes detachably locked within the second slot (252b) as the combination blade is locked to the cutting blade for providing the apparatus with the crushing jaws.

5. A utility machine comprising the demolishing apparatus (200) according to any of the preceding claims for demolishing concrete structures.

## Patentansprüche

1. Abbruchgerät (200) zum Abbrechen einer Betonstruktur, umfassend:
eine Zerkleinerungsklinge (220) zum Zerkleinern von Beton,
eine Schneidklinge (230) zum Schneiden von Metall,
eine Kombinationsklinge (250) zur Verwendung beim Zerkleinern von Beton zusammen mit der Zerkleinerungsklinge und zur Verwendung beim Schneiden von Metall zusammen mit der Schneidklinge und
Betätigungselemente (240a, 240b) zum Betreiben der Zerkleinerungs-, Schneid- und Kombinationsklingen,
wobei die Vorrichtung auf entfernbare Weise an einer Arbeitsmaschine angebracht werden kann,
wobei die Zerkleinerungs- und Schneidklingen (220, 230) voneinander getrennt sind,
wobei die Zerkleinerungsklinge eine erste Zerkleinerungsbacke (222a) bildet und die angebrachten Kombinations- und Schneidklingen gemeinsam eine zweite Zerkleinerungsbacke (222b) bilden, und
wobei die angebrachten Zerkleinerungs- und Kombinationsklingen eine erste Schneidbacke (232a) bilden und die Schneidklinge eine zweite Schneidbacke (232b) bildet;
**dadurch gekennzeichnet, dass**
die Betätigungselemente (240a, 240b) die Zerkleinerungsbacken (222a, 222b) und die Schneidbacken (232a, 232b) aufeinander zu drücken, wobei sich die Zerkleinerungs-, Schneid- und Kombinationsklingen (220, 230, 250) um eine gemeinsame Mittelachse (260) bewegen.

2. Gerät nach dem vorhergehenden Anspruch, wobei die Zerkleinerungs- und Schneidklingen Trajektorien aufweisen, die gegenläufig aufeinander zu verlaufen, und die Kombinationsklinge eine Trajektorie aufweist, die in Bezug auf die Trajektorien der Zerkleinerungs- und Schneidklingen in überlappender Weise verläuft.

3. Gerät nach einem der vorhergehenden Ansprüche, das ferner Verschiebe- und Verriegelungsmittel (252a, 252b, 270a, 270b, 272a, 272b) beinhaltet, welche die Kombinationsklinge versetzen und in Eingriff mit der Schneidklinge verriegeln, wodurch es möglich wird, Beton mit den Zerkleinerungs- und Kombinationsklingen zu zerkleinern, und welche die Kombinationsklinge versetzen und in Eingriff mit der Zerkleinerungsklinge verriegeln, wodurch es möglich wird, Metall mit den Schneid- und Kombinationsklingen zu schneiden.

4. Gerät nach Anspruch 3, wobei die Verschiebungs- und Verriegelungsmittel Schlitze (252a, 252b), die in der Kombinationsklinge enthalten sind, einen ersten Hydraulikzylinder (270a), der an der Zerkleinerungsklinge angebracht und mit einem Verriegelungsstift (272a) versehen ist, der lösbar mit dem ersten Schlitz (252a) verriegelt wird, wenn die Kombinationsklinge zum Versehen des Geräts mit den Schneidbacken mit der Zerkleinerungsklinge verriegelt wird, und einen zweiten Hydraulikzylinder (270b) umfassen, der an der Schneidklinge angebracht und mit einem Verriegelungsstift (272b) versehen ist, der lösbar mit dem zweiten Schlitz (252a) verriegelt wird, wenn die Kombinationsklinge zum Versehen des Geräts mit den Zerkleinerungsbacken mit der Schneidklinge verriegelt wird.

5. Arbeitsmaschine, umfassend das Abbruchgerät (200) nach einem der vorhergehenden Ansprüche zum Abbrechen von Betonstrukturen.

## Revendications

1. Appareil de démolition (200) destiné à démolir une structure en béton, comprenant
une lame de concassage (220) pour le concassage du béton,
une lame de découpe (230) pour couper le métal,
une lame combinée (250) destinée à être utilisée dans le concassage du béton conjointement avec la lame de concassage et destinée à être utilisée dans la découpe de métal conjointement avec la lame de découpe, et
des éléments d'actionnement (240a, 240b) destinés à faire fonctionner la lame de concassage, la lame de découpe et la lame combinée, lequel appareil peut être fixé à une machine utilitaire de manière amovible, dans lequel les lames de concassage et de découpe (220, 230) sont séparées l'une de l'autre,
dans lequel la lame de concassage constitue une première mâchoire de concassage (222a), et la lame combinée et la lame de découpe fixées constituent conjointement une seconde mâchoire de concassage (222b), et
dans lequel la lame de concassage et la lame combinée fixées constituent une première mâchoire de concassage (232a), et la lame de découpe constitue une seconde mâchoire de découpe (222b), et
**caractérisé en ce que**
les éléments d'actionnement (240a, 240b) compriment les mâchoires de concassage (222a, 222b) et les mâchoires de découpe (232a, 232b) les unes vers les autres, dans lequel la lame de concassage, la lame de découpe et la lame combinée (220, 230, 250) se déplacent autour d'un essieu central commun (260).

2. Appareil selon la revendication précédente, dans lequel les lames de concassage et de découpe ont des trajectoires qui s'étendent dans le sens opposé l'une vers l'autre, et la lame combinée a une trajectoire qui s'étend de manière superposée par rapport aux trajectoires des lames de concassage et de découpe.

3. Appareil selon l'une quelconque des revendications précédentes, qui comprend en outre des moyens de déplacement et de verrouillage (252a, 252b, 270a, 270b, 272a, 272b), qui déplacent la lame combinée et la verrouille en prise avec la lame de découpe, ce qui permet de concasser le béton avec la lame de concassage et la lame combinée, et qui déplacent la lame combinée et la verrouille en prise avec la lame de concassage, ce qui permet de découper du métal avec la lame de découpe et la lame combinée.

4. Appareil selon la revendication 3, dans lequel les moyens de déplacement et de verrouillage comprennent des fentes (252a, 252b) incluses dans la lame combinée, un premier vérin hydraulique (270a) fixé à la lame de concassage et pourvu d'une goupille de verrouillage (272a) qui devient verrouillée de façon amovible avec la première fente (252a) lorsque la lame combinée est verrouillée sur la lame de concassage pour fournir les mâchoires de découpe à l'appareil, et un second vérin hydraulique (270b) fixé à la lame de découpe et muni d'une goupille de verrouillage (272b) qui se verrouille de manière amovible dans la seconde fente (252b) lorsque la lame combinée est verrouillée sur la lame de découpe pour fournir les mâchoires de concassage à l'appareil.

5. Machine utilitaire comprenant l'appareil de démolition (200) selon l'une quelconque des revendications précédentes, destiné à démolir des structures en béton.
